# EUROPÄISCHE PATENTANMELDUNG

(11) **EP 1 568 667 A2**
(43) Veröffentlichungstag der Anmeldung: **31.08.2005**
(21) Anmeldenummer: 05003497.4
(22) Anmeldetag: 18.02.2005
(51) Int. Cl.: C03C 10/16, C03C 10/00

(54) **Verstärkte, pressbare Keramikzusammensetzungen für Dentalzwecke**

(30) Priorität: 27.02.2004 DE 102004010138
(71) Anmelder: Heraeus Kulzer GmbH, 63450 Hanau (DE)
(72) Erfinder: Steidl, Jürgen, 61206 Wöllstadt (DE)
(74) Vertreter: Kühn, Hans-Christian

(57) **Zusammenfassung**

Pressbare Glaskeramikzusammensetzungen für Dentalzwecke der Zusammensetzung I, II oder III

| I | | II | | III | |
|---|---|---|---|---|---|
| ZrO2 | 17 - 70% | ZrO2/Al2O3 | 15 - 70% | Al2O3 | 15 - 70% |
| SiO2 | 17 - 59% | SiO2 | 17 - 59% | Si02 | 17 - 59% |
| Al2O3 | 2 - 15% | ZrO2 | 2 - 15% | ZrO2 | 2 - 15% |
| Y2O3 | 0 - 6% | Y2O3 | 0 - 6% | Y2O3 | 0 - 6% |
| K2O | 3 -12,5% | K2O | 3 -12,5% | K2O | 3 - 12,5% |
| Na2O | 0,2 - 8,5% | Na2O | 0,2 - 8,5% | Na2O | 0,2 - 8,5% |
| Li2O | 0 - 1,5% | Li2O | 0 - 1,5% | Li2O | 0 - 1,5% |
| CaO | 0,3 - 2% | CaO | 0,3 - 2% | CaO | 0,3 - 2% |
| B2O3 | 0,1 - 5% | B2O3 | 0,1 - 5% | B2O3 | 0,1 - 5% |
| F | 0 - 2.5% | F | 0 - 2.5% | F | 0 - 2.5% |
| CeO2 | 0,2 - 2% | CeO2 | 0,2 - 2% | CeO2 | 0,2 - 2% |
| TiO2 | 0 -1,5% | TiO2 | 0 -1,5% | TiO2 | 0 -1,5% |

eignen sich besonders zur Herstellung keramischer Verblendgerüste.

## Beschreibung

Die Erfindung betrifft pressbare Glaskeramikzusammensetzungen für Dentalzwecke, die im Hinblick auf Bruchfestigkeit und Bruchzähigkeit verstärkt sind.

Ein inzwischen gängiges Verfahren zur Herstellung vor allem von vollkeramischen Dentalrestaurationen ist die sogenannte Presskeramik, bei der dentalkeramisches Material unter Druck und Wärmeeinfluss in einen viskosen Zustand versetzt wird und in eine dem Zahnersatz entsprechende Form hineingedrückt wird. Die Technik und ein dafür geeigneter Pressofen ist z.B. in EP 0 231 773 A1 beschrieben und als Empress® Verfahren bekannt geworden (Fa. Ivoclar, Schaan, LI). Das Verfahren eignet sich zur Herstellung von (Teil-)Kronen, Inlays, Onlays, Veneers oder Brücken, aber auch zur Herstellung von Gerüsten für die sogenannte Verblendkeramik. Bei dieser Technik werden in der Regel Metallgerüste mit Keramik so verblendet, dass schließlich zahnfarbener Zahnersatz entsteht. Entsprechend entstehen mittels der Presskeramik vollkeramische Gerüste, die den Vorteil haben, dass kein dunkles Metall unter der Verblendung durchscheinen kann.

Die gängigen Presskeramik-Materialien erreichen Bruchfestigkeiten von 220 MPa [Manfred Kern, Arbeitsgemeinschaft Keramik Prof. Dr. Lothar Pröbster (Wiesbaden-Tübingen) http://www.ag-keramik.de/news11whoiswho.htm]. Die Materialien der zweiten Generation (Empress® 2) sind Lithiumdisilikat Glaskeramiken und erreichen höhere Festigkeiten von 350-400 MPa (DE0019750794A1, DE0019647739C2, EP1149058A2 ). Dies wird damit erklärt, dass die Struktur der Lithiumdisilikatkristalle dem "Mikado"-Prinzip gleicht. Mikrorisse würden dadurch am Weiterlaufen behindert. Ein Riss muss entweder viele Grenzflächen überwinden oder um die Kristalle herumlaufen, so dass die Rissenergie umgewandelt und zerstreut wird.

Unter Bruchfestigkeit oder Bruchgrenze versteht man bei Dentalkeramik diejenige Grenze bei Druck-, Zug-, Biege- oder Torsionsbelastung, bis zu der ein Werkstoff belastet werden kann, ohne zu brechen. Die Bruchlast ist die Kraft, die zum Zeitpunkt des Bruchs angewandt wird *(Hoffmann-Axthelm, Lexikon der Zahnmedizin, 1983).*

Die Biegefestigkeit der Empress® Presskeramik erreicht 110 bis 120 MPa (Volker Kluthe, Dissertation, http://darwin.inf.fu-berlin.de/2003/146/Literatur.pdf). Die Bruchzähigkeit liegt bei ca. 1,2. Es besteht ein Bedarf nach Materialien, welche zumindest einen Teil der genannten Werte übertreffen, wenn sie mit dem Presskeramikverfahren verarbeitet werden. Es hat bereits Versuche gegeben (DE 198 52 516 A1) leucithaltige Glaskeramiken für Verblendgerüste bereitzustellen, die besonders vorteilhafte Wärmeausdehnungskoeffizienten aufweisen, was die Kompatibilität zu Verblendmaterialien betrifft. Auf die mechanischen Eigenschaften wurde in der DE 198 52 516 A1 nicht eingegangen.

Es stellt sich die Aufgabe, ein Material bereitzustellen, das bei < 1200°C verpresst werden kann und hinsichtlich Bruchzähigkeit und Bruchfestigkeit sehr gute Werte aufweist.

Es wurde gefunden, dass Material mit einer der folgenden Zusammensetzung diese Anforderungen überraschend gut erfüllt:

| I | | II | | III | |
|---|---|---|---|---|---|
| ZrO2 | 17 - 70% | ZrO2/Al2O3 | 15 - 70% | Al2O3 | 15 - 70% |
| SiO2 | 17 - 59% | SiO2 | 17 - 59% | SiO2 | 17 - 59% |
| Al2O3 | 2 - 15% | ZrO2 | 2 - 15% | ZrO2 | 2 - 15% |
| Y2O3 | 0 - 6% | Y2O3 | 0 - 6% | Y2O3 | 0 - 6% |
| K2O | 3 -12,5% | K2O | 3 -12,5% | K2O | 3 -12,5% |
| Na2O | 0,2 - 8,5% | Na2O | 0,2 - 8,5% | Na2O | 0,2 - 8,5% |
| Li2O | 0 -1,5% | Li2O | 0 -1,5% | Li2O | 0 -1,5% |
| CaO | 0,3 - 2% | CaO | 0,3 - 2% | CaO | 0,3 - 2% |
| B2O3 | 0,1 - 5% | B2O3 | 0,1 - 5% | B2O3 | 0,1 - 5% |
| F | 0 - 2.5% | F | 0 - 2.5% | F | 0 - 2.5% |
| CeO2 | 0,2 - 2% | CeO2 | 0,2 - 2% | CeO2 | 0,2 - 2% |
| TiO2 | 0 -1,5% | TiO2 | 0 -1,5% | TiO2 | 0 -1,5% |

Dabei sind jeweils Aluminium oder Zirkonoxid in relativ großen Mengen vorhanden (Spalten I und III). In Frage kommen auch Mischungen oder Mischoxide von Al2O3/ZrO2 (Spalte II). Das Aluminiumoxid wird vorzugsweise in nanopartikulärer Form eingesetzt, z.B.
- NanoTek® der Firma Nanophase (Al₂O₃, Reinheit 99.95 +%, durchschnittliche Teilchengröße 47 nm (bestimmt über SSA); SSA = 35 m²/g (BET); weißes Pulver; Dichte des Pulvers = 0.26 g/cc, wahre Dichte = 3.6 g/cc ; Morphologie = sphärisch); oder
- Taimicron® der Firma Teimei mit Primärteilchengrößen von 0.007 bis 0,2 Mikrometer.

Das Zirkonoxid ist vorzugsweise unstabilisiert oder teilstabilisiert. Insbesondere werden Materialien der Typen Tosoh TZO, TZ-3Y (94,8% ZrO2, 5.1 % Y2O3), TZ-3YS (94,8% ZrO2, 5.1 % Y2O3, "smooth flowing grade"), TZ-3YS-E (Zt02 mit 3 mol% Y2O3, "uniform dispersed"), TZ5Y, TZ 5YS, TZ 5Y E (analog mit 5 mol% Y2O3).

Das erfindungsgemäße Material ist vorzugsweise bei 880 bis 1200°C pressbar.

Selbstverständlich ist die Zugabe geringer Mengen in der Dentaltechnik üblicher keramischer Pigmente zur farblichen Charakterisierung möglich, ohne dass die mechanischen Eigenschaften wesentlich beeinträchtigt werden.

Bevorzugte Materialien besitzen einen linearen thermischen Ausdehnungskoeffizienten von 6,8 bis 14,5 x 10⁻⁶ K⁻¹

Bevorzugte Materialien weisen eine Bruchfestigkeit von 250 bis 420 MPa und eine Bruchzähigkeit von 3,0 bis 4,0 auf.

Die Materialien werden vorzugsweise für vollkeramische Gerüste eingesetzt. Sie können durch Aufbrennen von Verblendmaterial an die Anforderungen an künstlichen Zahnersatz ästhetisch angepaßt werden.

Das Material kann in handelsüblichen Dentalpressöfen bei einer maximalen Arbeitstemperatur von 1200°C verpresst werden. Dabei kann die Formgebung nach dem Prinzip der verlorenen Form in handelsüblicher phosphatgebundener Einbettmasse erfolgen. Es ist auch möglich, das Material in Form vorgesinterter, zylindrischer Pellets einzusetzen.

Das erfindungsgemäße Material bietet insbesondere den Vorteil, dass die uneingeschränkte Verwendung im Molarenbereich möglich ist, wo besonders große Kräfte wirken. Insbesondere können dort kleinere Brücken aus dem erfindungsgemäßen Material eingesetzt werden. Das bedeutet insgesamt eine Erweiterung der Indikation von Presskeramik in der restaurativen Zahnmedizin.

Ein Beispiel für eine erfindungsgemäße Glaskeramik ist folgende Zusammensetzung:

| | |
|---|---|
| ZrO2 (mit 3 % Y2O3) | 55,0 % |
| SiO2 | 25,7 % |
| Al2O3 | 4,2 % |
| (Y2O3 ) | -- % |
| K2O | 4,7 % |
| Na2O | 4,4 % |
| Li2O | 0,5% |
| CaO | 0,4 % |
| B2O3 | 2,5% |
| F | 1,4 % |
| CeO2 | 0,8% |
| TiO2 | 0,5 % |

Das Material weist eine Bruchfestigkeit von [390±40] und eine Bruchzähigkeit von [3,4] auf.

## Patentansprüche

1. Pressbare Glaskeramikzusammensetzung I, II oder III für Dentalzwecke, enthaltend
| I | | II | | III | |
|---|---|---|---|---|---|
| ZrO2 | 17 - 70% | ZrO2/Al2O3 | 15 - 70% | Al2O3 | 15 - 70% |
| SiO2 | 17 - 59% | SiO2 | 17 - 59% | SiO2 | 17 - 59% |
| Al2O3 | 2 - 15% | ZrO2 | 2 - 15% | ZrO2 | 2 - 15% |
| Y2O3 | 0 - 6% | Y2O3 | 0 - 6% | Y2O3 | 0 - 6% |
| K2O | 3 -12,5% | K2O | 3 -12,5% | K2O | 3 -12,5% |
| Na2O | 0,2 - 8,5% | Na2O | 0,2 - 8,5% | Na2O | 0,2 - 8,5% |
| Li2O | 0 -1,5% | Li2O | 0 -1,5% | Li2O | 0 -1,5% |
| CaO | 0,3 - 2% | CaO | 0,3 - 2% | CaO | 0,3 - 2% |
| B2O3 | 0,1 - 5% | B2O3 | 0,1 - 5% | B2O3 | 0,1 - 5% |
| F | 0-2.5% | F | 0-2.5% | F | 0-2.5% |
| CeO2 | 0,2 - 2% | CeO2 | 0,2 - 2% | CeO2 | 0,2 - 2% |
| TiO2 | 0 -1,5% | TiO2 | 0 -1,5% | TiO2 | 0 -1,5% |

2. Glaskeramikzusammensetzung nach Anspruch 1, enthaltend zusätzlich keramische Farbkörper.

3. Glaskeramikzusammensetzung nach einem der vorstehenden Ansprüche, die einen linearen thermischen Ausdehnungskoeffizienten von 6,8 bis 14,5 x 10⁻⁶ K⁻¹aufweist.

4. Glaskeramikzusammensetzung nach einem der Ansprüche 1 bis 3, die eine Bruchfestigkeit von 250 bis 420 MPa aufweist.

5. Glaskeramikzusammensetzung nach einem der Ansprüche 1 bis 3, die eine Bruchzähigkeit von 3,0 bis 4,0 MPa aufweist.

6. Glaskeramikzusammensetzung nach einem der Ansprüche 1 bis 3, die bei einer Temperatur von 880-1200 °C verpresst werden kann.

7. Verwendung einer Glaskeramikzusammensetzung nach einem der vorstehenden Ansprüche zur Herstellung vollkeramischer Gerüste.

8. Verwendung einer Glaskeramikzusammensetzung nach einem der Ansprüche 1 bis 7 zur Herstellung vorgesinterter zylindrischer Pellets.
